# EUROPÄISCHE PATENTSCHRIFT

(11) **EP 0 635 360 B1**
(45) Veröffentlichungstag und Bekanntmachung des Hinweises auf die Patenterteilung: **01.12.1999**
(21) Anmeldenummer: 94110650.2
(22) Anmeldetag: 08.07.1994
(51) Int. Cl.: B32B 27/28, B32B 27/08, C08L 23/16, C08L 23/08

(54) **Tiefziehfähige Folie, Verfahren zu deren Herstellung und Verwendung derselben**
Deep-drawable film, method for its manufacture and its use
Film emboutissable, procédé pour sa fabrication et son utilisation

(30) Priorität: 17.07.1993 DE 4324090; 07.09.1993 DE 4330200
(43) Veröffentlichungstag der Anmeldung: 25.01.1995
(73) Patentinhaber: ALKOR GMBH KUNSTSTOFFE, D-81451 München (DE)
(72) Erfinder: Dous, Eberhardt, D-82237 Steinebach (DE); Mathavan, Thambirajah, D-80993 München (DE)
(74) Vertreter: Seiler, Siegfried

(56) Entgegenhaltungen:
- EP-A- 0 146 349
- EP-A- 0 428 851
- EP-A- 0 468 947
- EP-A- 0 568 815
- US-A- 5 206 294

## Beschreibung

Die vorliegende Erfindung betrifft eine tiefziehfähige Verbundfolie, die eine polyolefinhaltige Oberfolie und mindestens eine qualitativ und/oder quantitativ von der Zusammensetzung der Oberfolie abweichende polyolefinhaltige Unterfolie sowie gegebenenfalls eine Oberflächenschutzschicht enthält, wobei die Oberfolie (bezogen auf 100 Gew.-Teile Kunststoff der Oberfolie) (a) 20 bis 80 Gew.-Teile mindestens eines vernetzten PP-EPDM (Legierung oder Mischung aus Propylenhomo- und/oder -copolymerisat und vernetztem oder teilvernetztem Ethylen-Propylen-Dien-Mischpolymerisat) (b) 80 bis 20 Gew.-Teile eines unvernetzten Propylen-Block-Copolymerisates oder heterophasigen Propylen-Block-Polymerisates, mit einem Ethylen-Propylen-Elastomeranteil im Block bzw. in der Kette von 35 bis 75 Gew.-% (bezogen auf 100 Gew.-Teile des unvernetzten heterophasigen Propylen-Block-Copolymerisates oder Propylen-Block-Polymerisates) enthält, wobei (b) zu 15 bis 1 Gew.-%, vorzugsweise 10 bis 2 Gew.-%, durch die gleichen Gewichtsmengen eines reaktive Gruppen enthaltenden Polymeren und/oder Ionomeren (c) ersetzt ist, wobei (c) mindestens einen realitive Gruppen enthaltenden Polymeren und/oder Ionomeren auf der Basis von Ethylen und Methacrylsäure und/oder Acrylsäure ist, wobei die Säure-Gruppen teilweise Metallionen enthalten oder durch Metallionen neutralisiert sind, und die Unterfolie oder Unterfolien mindestens zwei verschiedene Polyolefine oder polyolefinhaltige Polymerisate, -co-, -ter- oder -blockpolymerisate enthält.

Die unterschiedlichen Folien auf der Basis von Polyolefinen, insbesondere solcher auf der Basis von Polypropylen mit Polyethylen und deren Verarbeitung sind bereits bekannt Die Anforderungen an die Folien je nach Verwendungsgebiet sind jedoch so unterschiedlich und mit steigenden Ansprüchen verbunden, daß ein Bedürfnis nach Folien mit verbesserten und/oder verbesserten Verarbeitungsmöglichkeiten besteht.

Aus der US-B-5206294 ist bereits eine Kunststoffmischung bekannt, die teilweise vernetztes EPDM, Polypropylen, reaktive Gruppen enthaltende Polymere oder Ionomere und ein reaktive Gruppen enthaltendes polymeres Vernetzungsmittel enthält. Die daraus hergestellten Monofolien sind gut tiefziehfähig, erfüllen jedoch nicht andere von der Kraftfahrzeugindustrie geforderte Eigenschaften.

Im Rahmen dieser Erfindung wurden zahlreiche Versuche mit Folienrezepturen durchgeführt, bei denen unter anderem solche getestet wurden, die ein vernetztes PP-EPDM und ein unvernetztes Propylen-Block-Copolymerisat oder heterophasiges Propylen-Block-Polymerisat enthielten. Diese Folien weisen eine gute Narbstabilität auf und haben einen gewissen Mattierungsgrad bzw. eine bestimmte Mattigkeit, wie sie bei mehreren Anwendungsgebieten (z.B. Autoinnenverkleidung und dergleichen) gewünscht wird.

Die Folie dieser Zusammensetzung hat jedoch den Nachteil, daß sie schlecht tiefziehfähig ist und die Narbstabilität zum Teil verloren geht. Es ergibt sich somit, daß auch die Eigenschaften dieser Folie verbesserungsbedürftig sind.

In der EP-A-0630746 wurde bereits vorgeschlagen, die Folie gemäß US-A-0520694 mit gewissen Änderungen der chemischen Bestandteile als Unterfolie zu verwenden, wobei die Oberfolie (bezogen auf 100 Gew.-Teile Kunststoff der Oberfolie) (a) 20 bis 80 Gew.-Teile mindestens eines vernetzten PP-EPDM und (b) 80 bis 20 Gew.-Teile eines unvernetzten Propylen-Block-Copolymerisates oder heterophasigen Propylen-Block-Polymerisates mit einem Elastomeranteil im Block bzw. in der Kette von 35 bis 75 Gew.-% enhält, wobei (b) zu 15 bis 1 Gew.-%, vorzugsweise 10 bis 2 Gew.-%, durch die gleiche Gewichtsmenge eines reaktive Gruppen enthaltenden Polymeren und/oder Ionomeren (c) ersetzt ist, wobei (c) mindestens einen reaktive Gruppen enthaltenden Polymeren und/oder Ionomeren auf der Basis von Ethylen und Methacrylsäure und/oder Acrylsäure ist, wobei die Säuregruppen teilweise Metallionen enthalten oder durch Metallionen neutralisiert sind.

Aus der EP-A-0146349 ist weiterhin ein Laminat bekannt, das eine thermoplastische Elastomerschicht aufweist, bestehend hauptsächlich aus einer Zusammensetzung, die ein Polyolefin und ein olefinisches Copolymer-Elastomeres, von denen mindestens eines teilweise vernetzt ist, enthält. Die andere Schicht des Laminates besteht aus einem teilweise neutralisierten Ionomer oder einem 1-Olefin/(Meth)-acrylsäure-Copolymerisat, das eine freie Carboxyl-Gruppe besitzt. Das Laminat wird für extrudierte Teile verwendet, die eine gute Oberflächenhärte und Stoßfestigkeit aufweisen, ohne daß ein Tiefziehvorgang erforderlich oder durchgeführt wird.

Aus der EP-A-0568815 ist eine Folie oder ein Formkörper aus einem thermoplastischen Kunststoff auf der Basis eines teilkristallinen Ethylen-Propylen-Dien-Terpolymers, eines Homo- und/oder Copolymers eines Alken und eines polymeren Modifizierungsmittels bekannt. Der thermoplastische Kunststoff enthält ein teilkristallines statistisches Ethylen-Propylen-Dien-Terpolymer, das zu mindestens etwa 30 % vernetzt ist und stellt ein thermoplastisches Elastomer dar. Auf etwa 70 bis 30 Gew.-Teile des teilkristallinen Ethylen-Propylen-Dien-Terpolymers entfallen etwa 30 bis 70 Gew.-Teile eines Homo- und/oder Copolymers von Ethylen und/oder Propylen und der thermoplastische Kunststoff enthält mindestens etwa 5 Gew.-% eines teilkristallinen und/oder amorphen Modifizierungsmittels, wobei der gewichtsprozentuale Summenanteil des Ethylens und Propylens in dem teilkristallinen Ethylen-Propylen-Dien-Terpolymer zwischen etwa 15 und 91 Gew.-% liegt.

Die Folie dient auch für Kraftfahrzeuginnenverkleidungen, wobei jedoch eine spezielle Verbundfolie nicht beschrieben wird.

Aus der EP-A-0428851 ist eine Kunststoffdichtungsbahn bekannt, bei der eine Oberschicht und eine Unterschicht ein dazwischen liegendes Trägermaterial derart durchdringen, daß sie miteinander verschweißt sind. Als Gewebematerial dienen dabei Gewebe, Gewirke, Gelege oder Vliese. Die Oberschicht und die Unterschicht sind auf der Basis wenigstens eines Copolymeren, der aus dem monomeren Ethylen und einem Comonomeren, ausgewählt aus der Gruppe Vinylester einer C₂ bis C₃-Alkan-Carbonsäure und C₁ bis C₄-Alkylestern der Acrylsäure, besteht.

Die EP-A-0468947 betrifft eine dynamisch vernetzte Kunststoffmischung, die ein Polyolefinharz, eine Elastomerkomponente und ein Ethylen-Copolymerisat enthält, wobei jedoch eine Tiefziehfähigkeit der daraus hergestellten Formteile nicht angestrebt wird. Das vernetzte Elastomer wird aus der Gruppe der Copolymerisate mit C₄ bis C₇ Iso-Mono-Olefin und C₄ bis C₁₄ Multiolefin, einem halogenierten Copolymerisat eines C₄ bis C₇ Iso-Mono-Olefins und einem C₄ bis C₁₄ Multiolefin, einem halogenierten Copolymerisat eines C₄ bis C₇ Iso-Mono-Olefins mit einem Alkyl-Styrol, EPDM, Polyisopren, Polychlorpropen, Styrol-Butadien, Nitrilkautschuk, chlorsulfonierten Polyethylen und Mischungen daraus, ausgewählt. Die Mischung enthält weiter ein Polyolefinharz (wobei bestimmte Polyolefinharze ausgenommen sind) sowie Ethylen-Copolymerisat, ausgewählt aus der Gruppe Copolymerisate von Ethylen und Vinylacetat oder Ethylen und Alkylester einer alpha-, betamonoethylenisch ungesättigten Monocarbonsäure und Mischungen davon.

Im Rahmen dieser Erfindung wurden zahlreiche Versuche mit Folienrezepturen durchgeführt, bei denen unter anderem solche getestet wurden, die ein vernetztes PP-EPDM oder ein unvernetztes Propylen-Block-Copolymerisat oder heterophasiges Propylen-Block-Polymerisat enthielten.

Diese Folien weisen eine gewisse Narbstabilität auf und haben einen Mattierungsgrad, der bei mehreren Anwendungsgebieten noch ausreichend ist. Andere Möglichkeiten der Mattierung von Kunststoffolienoberflächen mit Mattlacken sind nicht zur Herstellung von Tiefziehfolien geeignet oder geben nach dem Prägen keine gleichmäßigen Strukturen mit Matteffekten.

Besondere Anforderungen an Kunststoffolien werden zur Herstellung tiefziehfähiger Kraftfahrzeugfolien, -bahnen oder Kraftfahrzeugfolienschichten gestellt, da bei Formteilen unterschiedliche Tiefziehverhältnisse am gleichen Formteil eingehalten werden müssen. Trotzdem soll das Formteil an allen Stellen die gleiche Prägestruktur und Mattigkeit aufweisen. Andererseits werden besondere Auforderungen an die Kratzfestigkeit der Kunststoffoberflächen, Fogwerte, die Alterungsstabilität und dergleichen gestellt.

Ziel und Aufgabe der vorliegenden Erfindung war es, gegenüber dem Stand der Technik eine verbesserte Folie mit verbesserten Eigenschaften oder Verarbeitungseigenschaften zu erzielen. Insbesondere sollte die Folie eine gute oder verbesserte Narbstabilität aufweisen, die Oberflächen sollten ohne zusätzliche Mattierungsmittel matt sein bzw. eine gewisse Mattigkeit oder Mattierungsgrad aufweisen. Insbesondere sollte jedoch die Folie gut tiefziehfähig sein und auch zu Formteilen oder Gegenständen verarbeitet werden können, an die relativ hohe Anforderungen gestellt werden.

Derartige Anwendungsgebiete sind zum Beispiel Formteile, Gegenstände oder Tiefziehteile für Kraftfahrzeuge, insbesondere Kraftfahrzeuginnenverkleidungen.

Erfindungsgemäß wurde festgestellt, daß diesen Zielen und Aufgaben eine tiefziehfähige Verbundfolie gerecht wird, die eine polyolefinhaltige Oberfolie und mindestens eine qualitativ und/oder quantitativ von der Zusammensetzung der Oberfolie abweichende polyolefinhaltige Unterfolie sowie gegebenenfalls eine Oberflächenschutzschicht enthält.

Dabei enthält die Oberfolie (bezogen auf 100 Gew.-Teile Kunststoff der Oberfolie) (a) 20 bis 80 Gew.-Teile mindestens eines vernetzten PP-EPDM (Legierung oder Mischung aus Propylenhomo- und/oder -copolymerisat und vernetztem oder teilvernetztem Ethylen-Propylen-Dien-Mischpolymerisat), (b) 80 bis 20 Gew.-Teile eines unvernetzten Propylen-Block-Copolymerisates oder heterophasigen Propylen-Block-Polymerisates, mit einem Elastomeranteil im Block bzw. in der Kette von 35 bis 75 Gew.-% (bezogen auf 100 Gew.-Teile des unvernetzten heterophasigen Propylen-Block-Copolymerisates oder Propylen-Block-Polymerisates), wobei (b) zu 15 bis 1 Gew.-%, vorzugsweise 10 bis 20 Gew.-%, durch die gleichen Gewichtsmengen eines reaktive Gruppen enthaltenden Polymeren und/oder Ionomeren (c) ersetzt ist, wobei (c) mindestens einen reaktive Gruppen enthaltenden Polymeren und/oder Ionomeren auf der Basis von Ethylen und Methacrylsäure und/oder Acrylsäure ist, wobei die Säure-Gruppen teilweise Metallion enthalten oder durch Metallionen neutralisiert sind und die Unterfolie oder Unterfolien mindestens zwei verschiedene Polyolefine oder polyolefin- oder olefinhaltige Polymerisate, -co-, -ter-, -pfropf- oder -blockpolymerisate enthält bzw. enthalten.

Gemäß der Erfindung enthält die Unterfolie als Kunststoff 65 Gew.-% bis 90 Gew.-% (bezogen auf 100 Gew.-% Kunststoffanteil der Unterfolie) Propylenhomo-, -co-, -ter- und/oder -blockpolymerisat und 35 bis 10 Gew.-% Ethylenvinylacetat-Copolymerisat mit einem Vinylacetatgehalt von 10 bis 40 Gew.-% oder besteht daraus, wobei ein Kunststoffbestandteil oder das Kunststoffgemisch oder die Kunststofflegierung mit 0,1 bis 5,0 Gew.-% mindestens eines Peroxydes oder einer peroxydgruppenhaltigen Verbindung behandelt ist, oder die Unterfolie enthält mindestens ein teilvernetztes EPDM, ein Propylenhomo-, -copolymerisat oder -pfropfpolymerisat mit oder ohne reaktive Gruppen zusätzlich ein Styrol oder Polystyrol enthaltendes Block-, Diblock- oder Triblock- und/oder Pfropfpolymerisat, das teilweise durch ein Modifizierungsmittel auf der Basis eines Propylenmaleinsäureanhydrid-Misch- oder Pfropfpolymerisates, eines Propylenacrylsäure-Misch- oder Pfropfpolymerisates, eines Ethylen-Vinylacetat-Copolymerisates, eines Ethylenacrylsäure- bzw. Methacrylsäure-Copolymerisates, eines Ethylenacrylsäureester-Copolymerisates, eines Glycidyl-Methacrylat-Co- und/oder -terpolymerisates, vorzugsweise eines olefinischen oder olefingruppenhaltigen Glycidyl-Methacrylat-Co- und/oder -terpolymerisates, eines Ethylen-Glycidyl-Methacrylat-Terpolymerisates, eines olefinischen Ionomeren, eines Polyurethans, eines Polycaprolactons, eines Polyesterethers und/oder eines Polyetheramids ersetzt ist.

Die erfindungsgemäße Verbundfolie stellt eine flexible tiefziefähige Kraftfahrzeugfolie oder -bahn dar, die für die Herstellung thermoverformter Formteile mit gleichmäßig matter Oberfläche für Kraftfahrzeugfolien für Innenverkleidungen besonders gut geeignet ist.

Die Mattigkeit dieser Folie ist weitgehend unabhängig von der Verformungstemperatur und dem Verformungsgrad, d. h. an allen Stellen des Formteils ist gleiche oder annähernd gleiche Mattigkeit der Folienoberfläche oder des daraus hergestellten thermogeformten Formteiles gegeben. Die Oberfolie enthält dabei vorzugsweise ein dynamisch vernetztes oder teilvernetztes PP-EPDM oder PP-EPDM-Mischungen oder Legierungen. Die Bestandteile (a), (b) und (c) der Oberfolie werden gegebenenfalls in Kombination mit Verarbeitungshilfs-, Zusatzmitteln, Füllstoffen, Farbstoffen und/oder Farbpigmenten eingesetzt.

Gemäß einer bevorzugten Ausführungsform werden die Bestandteile der Unterfolie so ausgewählt, daß die daraus hergestellte Unterfolie (bezogen auf den Anfangs- oder Ausgangsquerschnitt der Unterfolie) eine maximale Dehn-Spannung im Bereich von 20x10³ bis 130x10³ Pa aufweist (wobei diese Werte bei einer konstanten Verformungsgeschwindigkeit bei 170 °C ermittelt werden) und/oder daß die Dehn-Spannungskurve bei einer Dehnung über 150 %, vorzugsweise über 300% Dehnung, nach Erreichung des Maximums annähernd parallel zur Dehmungsachse verläuft.

Nach einer weiteren bevorzugten Ausführungsform besteht die Unterfolie (bezogen auf den Kunststoffanteil) aus 70 bis 85 Gew.-%, vorzugsweise 75 bis 83 Gew.-%, (bezogen auf 100 Gew.-% Kunststoffanteil der Unterfolie) aus Propylenhomo-, -co-, -ter- und/oder -blockpolymerisat und 30 bis 15 Gew.-%, vorzugsweise 25 bis 17 Gew.-%, Ethylenvinylacetat-Copolymerisat, die mindestens ein Peroxyd oder eine peroxydgruppenhaltige Verbindung enthalten oder mit diesen behandelt sind.

Der Polypropylen-Block des unvernetzten heterophasigen Polypropylen-Blockpolymerisates besteht vorzugsweise aus einem Propylen-, -co- und/oder -blockpolymerisat. Der Elastomeranteil des heterophasigen Polypropylen-Blockcopolymerisates beträgt nach einer vorzugsweisen Ausführungsform 40 bis 70 Gew.-% (bezogen auf 100 Gew.-Teile des unvernetzten heterophasigen Propylen-Blockcopolymerisats). Nach einer anderen bevorzugten Ausführungsform beträgt jedoch der Elastomeranteil des heterophasigen Polypropylen-Blockcopolymerisates 35,5 bis 48 Gew.-%, vorzugsweise 36 bis 45 Gew.-% (bezogen auf 100 Gew.-Teile des unvernetzten heterophasigen Propylen-Blockpolymerisates). Nach einer bevorzugten Ausführungsform besitzt das Elastomer des Ethylen-Propylen-Copolymerisates, einen Ethylenanteil von 20 bis 70 Gew.-%, vorzugsweise 30 bis 60 Gew.-%, und eine Propylenanteil von 80 bis 30 Gew.-%, vorzugsweise 70 bis 40 Gew.-%, und weist ein Molekulargewicht größer als 100.000, vorzugsweise größer als 150.000, auf.

Der Zusatz eines dynamisch vernetzten PP-EPDM-Blends in der Ober- und/oder Unterfolie mit einer Teilchengröße der vernetsten Elastomerphase von 0,5 bis 15 µm verbessert den Verformungsbereich, die Gleichmäßigkeit der Wärmedehnung und das Narbbild. Ein verbessertes Narbbild bedeutet, daß die überproportionale Verdehnung der Narbtäler durch die mit zunehmender Dehnung ansteigende Festigkeit begrenzt wird (strain hardening). Um diesen Effekt zu erreichen, ist eine homogene Einarbeitung der vernetzten PP-EPDM-Blends und eine partikelförmige Elastomerstruktur notwendig.

Daraus resultieren gewisse Anforderungen an den Vernetzungsgrad und den Schmelzindex der verwendeten vernetzten PP-EPDM-Blends. Der Vernetzungsgrad bei den komplexen Systemen, indirekt definiert durch den Kompressionsset bei 70 °C nach 22 Std. (DIN 53517), soll zwischen 25 und 60 liegen.

Als heterophasiges Propylen-Blockpolymerisat wird vorzugsweise ein Blockpolymerisat mit einem MFI 230/2,16 g/10 min von 0,3 bis 8, vorzugsweise 0,5 bis 7, verwendet.

Als PP-EPDM, vorzugsweise dynamisch vernetztes oder teilvernetztes PP-EPDM, werden für die Ober- und/oder Unterfolie(n) bevorzugt solche mit einer Dichte zwischen 0,83 bis 0,96 g/cm³, vorzugsweise 0,87 bis 0,91 g/cm³, angesetzt. Bevorzugt weist das PP-EPDM, das dafür ausgewählt wird, einen Biegemodul (Initial flexural modulus) - gemessen nach ASTM D 790 mit einer 2 mm dicken Folienbahn - von 80 bis 400 MPa, vorzugsweise 100 bis 300 MPa, auf

Die erfindungsgemäßen tiefziehfähigen Verbundfolien besitzen auf der Oberfolie einen Glanzgrad nach DIN 57530/60° von 0,5 bis 5, der weder von der erforderlichen Verformungstemperatur noch von dem Tiefziehverhältnis wesentlich beeinflußt wird. Dieses Merkmal unterscheidet also die erfindungsgemäßen Folien von den nach bisherigen Erfahrungen gesammelten Erkenntnissen mit Folien, die durch Füllstoffe oder Prägung mattiert wurden.

Unter Verwendung des erfindungsgemäßen Zusatzes bzw. der erfindungsgemäßen Mischung zur Herstellung von tiefziehfähigen Kraftfahrzeugfolien gelingt es, Kunststoffolien mit einer matten Oberfläche und hohen Elastizität für die Thermoverformung zu erhalten. Dabei kann die Thermoverformung der erfindungsgemäßen Verbundfolie in einem breiten Temperaturintervall von ca. 140 bis 200 °C, vorzugsweise 150 bis 185 °C, durchgeführt werden, ohne daß besondere Schwierigkeiten auftreten.

Die Folie ist ausgezeichnet tiefziehfähig und sowohl im Positivtiefziehverfahren als auch im Negativtiefziehverfahren einsetzbar. Unter Verwendung der Zusammensetzung gelingt es, Tiefziehfolien mit einer Shore D-Härte von 25 bis 60, vorzugsweise 30 bis 55, und einem Glanzgrad nach Gardner 60 °C von 0,5 bis 1,5, gemessen am tiefgezogenen Formteil, zu erhalten.

Die erfindungsgemäßen Kraftfahrzeugverbundfolienbahnen für die Innenverkleidung haben darüber hinaus den Vorteil der hohen Alterungsstabilität gegen Licht und Wärme sowie geringe Fog-Werte.

Nach einer bevorzugten Ausführungsform weist die Ober- und/oder Unterfolie einen Füllstoffgehalt von 0 bis 30 Gewichtsanteilen, vorzugsweise 0 bis 20 Gewichtsanteilen (bezogen auf 100 Gewichtsanteile Kunststoff), auf. Als Füllstoffe können die an sich bekannten Füllstoffe, vorzugsweise Talkum und/oder Si0₂, mit einer mittleren Teilchengröße von 0,01 bis 20 µm, vorzugsweise 0,05 bis 10 µm eingesetzt werden.

Als Verarbeitungshilfsmittel werden u. a. vorzugsweise Wärme- und/oder Lichtstabilisatoren für Polyolefine eingesetzt.

Als weitere Verarbeitungshilfsmittel oder Zusatzmittel werden u. a. Gleitmittel oder Gleitmittelgemische verwendet.

Nach einer Ausführungsform ist unterhalb der Folienschicht vorzugsweise eine Haftvermittlerschicht angeordnet. Die Haftvermittlerschicht besteht vorzugsweise aus Acrylaten, Polyurethan oder Acrylat-Polyurethan-Mischungen oder enthält diese. Unterhalb der Folienschicht oder Haftvermittlerschicht ist vorzugsweise eine Schaumschicht, eine Trägerschicht, eine Gewebeschicht und/oder Stützschicht angeordnet. Die Schaumschicht enthält vorzugsweise einen Polyolefinschaum oder einen Polyurethanschaum oder besteht daraus.

Bevorzugt hat die Oberfolie eine mittlere Dicke von 60 bis 500 µm, vorzugsweise 100 bis 350 µm. Die Unterfolie oder Unterfolien besitzen eine durchschnittliche Dicke von 100 bis 2000 µm, vorzugsweise 500 bis 1500 µm, wobei die Unterfolie oder Unterfolien eine Gesamtdicke besitzen, die mehr als das 1,5-fache, vorzugsweise 2- oder mehrfache, der Oberfolie beträgt.

Die erfindungsgemäße Verbundfolie ist sehr gut thermoverformbar und dient zur Herstellung spannungsarmer Formteile mit genauer Wiedergabe oder Reproduktion von form- oder temperaturstabilen Oberflächenstrukturierungen. Die Verbundfolie wird vorzugsweise im Positivtiefziehverfahren und/oder Negativtiefziehverfahren bearbeitet bzw. verarbeitet. Der Verbundwerkstoff weist an der Unterseite oder Unterfläche vorzugsweise eine Schaumschicht, z. B. Polyurethanschaum, vorzugsweise jedoch Polyolefinschaum auf, und/oder ist mit einer Trägerschicht bzw. einem Träger und/oder einer Stützschicht und/oder einer Gitter- oder Gewebeschicht versehen. Die Folie oder Schicht wird nach einer bevorzugten Ausführungsform mit Dekorgebungen, Narbungen, Prägungen und dergleichen versehen, ist narbbeständig, grifffreundlich und kann bedruckt werden. Unter Verwendung der erfindungsgemäßen Verbundfolie gelingt es Formteile oder Gegenstände herzustellen, deren Oberfläche eine gute Narbstabilität auch bei Wärmelagerung aufweist.

Nach einer bevorzugten Ausführungsform der Erfindung enthält die Unterfolie mindestens ein teilweise vernetztes EPDM und ein Propylenhomo-, -copolymerisat oder -pfropfpolymerisat mit oder ohne reaktive Gruppen, ein PP-EPDM oder dynamisch vernetztes oder teilweise vernetztes PP-EPDM mit mindestens einem der Bestandteile (b) oder (c) der Oberfolie und/oder mindestens ein reaktive Gruppen enthaltendes Polymeres und/oder Ionomeres oder besteht daraus.

Nach einer anderen bevorzugten Ausführungsform besteht die Unterfolie (bezogen auf den Kunststoffanteil) aus 65 bis 90 Gew.-% (bezogen auf 100 Gew.-% Kunststoff der Unterfolie) aus Propylenhomo-, -co-, -ter- und/oder -blockpolymerisat und 35 bis 10 Gew.-% Ethylen-Vinylacetat-Copolymerisat mit einem Vinylacetatgehalt von 10 bis 40 Gew.-%, vorzugsweise 20 bis 35 Gew.-%, wobei ein Kunststoff oder das Gemisch mit 0,1 bis 5 Gew.-%, vorzugsweise 0,2 bis 1,5 Gew.-%, mindestens eines Peroxydes oder einer peroxydgruppenhaltigen Verbindung behandelt ist. Bevorzugt besteht jedoch die Unterfolie aus 70 bis 85 Gew.-%, vorzugsweise 75 bis 83 Gew.-%, (bezogen auf 100 Gew.-% Kunststoff der Unterfolie) aus Propylenhomo-, -co-, -ter- und/oder -blockpolymerisat und 20 bis 15 Gew.-%, vorzugsweise 25 bis 17 Gew.-% Ethylenvinylacetat-Copolymerisat.

Wie bereits erwähnt enthält nach einer weiteren bevorzugten Ausführungsform die Unterfolie mindestens ein teilvernetztes EPDM, ein Propylenhomo-, -copolymerisat oder -pfropfpolymerisat mit oder ohne reaktive Gruppen sowie zusätzlich ein anderes Olefin bzw. Polyolefin und/oder Styrol bzw. Polystyrol enthaltendes Block-, Di-Block- oder Tri-Block- und/oder Pfropfpolymerisat oder das ganz oder teilweise durch ein Modifizierungsmittel auf der Basis eines Propylenmaleinsäureanhydrid-Misch- oder -pfropfpolymerisates, eines Propylenacrylsäure-Misch- oder -pfropfpolymerisates, eines Ethylenvinylacetat-Copolymerisates, eines Ethylenacrylsäure- bzw. Methacrylsäure-Copolymerisates, eines Ethylen-Acrylsäureester-Copolymerisates, eines Glycidyl-Methacrylat-Co- und/oder -terpolymerisates, vorzugsweise eines olefinischen oder olefingruppenhaltigen Glycidyl-Methacrylat-Co- und/oder -terpolymerisates und/oder eines Ethylen-Glycidyl-Methacrylat-Terpolymerisates oder -Copolymerisates, eines olefinischen Ionomeren, eines Polyurethans, eines Polycaprolactons, eines Polyesterethers und/oder eines Polyetheramids ersetzt ist.

Bevorzugt werden die Bestandteile der Unterfolie so ausgewählt, daß die daraus hergestellte Unterfolie (bezogen auf den Anfangs- oder Ausgangsquerschnitt der Unterfolie) eine maximale Dehn-Spannung im Bereich von 20x10³ bis 130x10³ Pa, vorzugsweise 40x10³ bis 70x10³ Pa, aufweist und/oder daß die Dehn-Spannungskurve bei einer Dehnung über 150 %, vorzugsweise über 300 % Dehnung, nach Erreichung des Maximums annähernd parallel zur Dehnungsachse verläuft.

Die daraus hergestellten oder tiefgezogenen Gegenstände, Formkörper, Teile und dergleichen, die vorzugsweise eine Schaumschicht, Trägerschicht oder einen Träger, Stützschicht und/oder eine Gitter- oder Gewebeschicht enthalten, werden bevorzugt für Schalttafeln oder Armaturenbretter für Kraftfahrzeuge, Seitenwandteile für Kraftfahrzeuge, Türverkleidungen für Kraftfahrzeuge, Dachinnenverkleidungen (Autohimmel), Innenrückwandteile für Kraftfahrzeuge (Hutablage) und andere Innenverkleidungsteile oder Gegenstände für Kraftfahrzeuge eingesetzt. Nach einer bevorzugten Ausführungsform ist dabei die Trägerschicht und/oder Schaumschicht polyolefinhaltig oder auf der Basis von Polyolefinen.

Die reaktive Gruppen enthaltenden Polymeren und/oder Ionomeren der Unterfolie enthalten nach einer Ausführungsform als Metallion vorzugsweise Alkali- und/oder Erdalkali-Ionen und/oder Zinnionen.

Nach einer Ausführungsform enthalten die reaktive Gruppen aufweisenden Polymeren und/oder Ionomeren Alkylacrylate und/oder Alkylmethacrylate mit 1 bis 8 C-Atomen.

Nach einer bevorzugten Ausführungsform weist der Propylen- bzw. Polypropylengehalt (Gehalt an Propylenhomo-, -co-, -ter- oder -blockpolymerisat) des vernetzten PP-EPDM (Bestandteil (a)) der Oberfolie bezogen auf 100 Gew.-Teile des in der Oberfolie enthaltenden PP-EPDM zwischen 60 bis 90 Gew.-%, vorzugsweise 65 bis 85 Gew.-%, auf, während das EPDM, das mit einem Peroxyd oder einer peroxydgruppenhaltigen Verbindung vernetzt wurde, einen Gewichtsanteil von 40 bis 10 Gew.-%, vorzugsweise 35 bis 15 Gew.-%, besitzt.

Nach einer bevorzugten Ausführungsform der Erfindung weist die Oberfolie eine Shore-D-Härte auf oder wird darauf eingestellt, die um mehr als 3 Shore D-Einheiten, vorzugsweise 5 bis 10 Shore D-Einheiten, niedriger ist als die Shore D-Härte der Unterfolie(n) und/oder daß die Oberflächenspannung der Oberfolie auf einen Wert von größer als 40 mN/m eingestellt ist.

Vorzugsweise ist die Oberfolie unter Verwendung mindestens eines Kunststoffes mit einer niedrigeren Shore D-Härte und mindestens eines Bestandteiles oder Kunststoffes mit einer höheren Shore D-Härte auf eine Shore D-Härte von weniger als 37, vorzugsweise auf eine Shore D-Härte von 28 bis 35, eingestellt und die Shore D-Härte der Unterfolie(n) beträgt mindestens 38 Shore D, vorzugsweise 39 bis 48 Shore D.

Nach einer anderen bevorzugten Ausführungsform ist oberhalb der Oberfolie oder auf der Folienoberfläche und/oder unterhalb der Unterfolie mindestens eine polyacrylat-, polymethacrylat- und/oder polyurethanhaltige Schicht angeordnet, deren Schichtdicke geringer als die Schichtdicke der Oberfolie oder Unterfolie ist, wobei vorzugsweise die Schichtdicke der Beschichtung weniger als 50% der Schichtdicke der Ober- oder Unterfolie(n) beträgt.

Dabei sind bevorzugt die Oberfolie und gegebenenfalls Teilbereiche der Unterfolie(n) geprägt oder genarbt und mit mindestens einer polyacrylat-, polymethacrylat- und/oder polyurethanhaltigen Schicht oder Beschichtung versehen, die 0,01 bis 18 Gew.-%, vorzugsweise 0,1 bis 12 Gew.-%, mindestens eines feinteiligen Mattierungsmittels enthält und durch Verdünnungsmittelauftrag beschichtet ist.

Die unterhalb der Unterfolie(n) angeordnete(n) polyacrylat-, polymethacrylat- und/oder polyurethanhaltigen oder (bezogen auf den Kunststoffanteil) daraus bestehende(n) Schicht(en) oder Beschichtung(en) enthalten bevorzugt mindestens ein antistatisches Mittel und/oder mindestens ein haftvermittelndes chemisches Mittel, vorzugsweise feinstteiligen Kohlenstoff oder Ruß mit einer mittleren Teilchengröße unter 100 nm, vorzugsweise zwischen 10 bis 80 nm, und/oder mindestens eine feinstteilige Kieselsäure oder ein feinstteiliges Siliziumdioxyd und/oder feinstteiliges Silikat mit einem mittleren Körnungsdurchmesser unter 4 µm, vorzugsweise unter 3 µm.

Das reaktive Gruppen enthaltende polymere Vernetzungsmittel der Unterfolie oder Unterfolien weist nach einer bevorzugten Ausführungsform neben Acrylat- und/oder Methacrylat-Gruppen bzw. Acrylsäure- und/oder Methacrylsäuregruppen und mehr als 51 Gew.-% Ethylen- und/oder Olefin- bzw. (CH₂)- oder CH-Gruppen Epoxidgruppen oder epoxyähnliche Gruppen, vorzugsweise Glycidylgruppen, auf. Die reaktive Gruppen enthaltenden Polymeren und/oder Ionomeren der Unterfolie enthalten als Metallion vorzugsweise Alkali- und/oder Erdalkali-Ionen und/oder Zinkionen. Nach einer Ausführungsform enthalten die reaktive Gruppen aufweisenden Polymeren und/oder Ionomeren Alkylacrylate und/oder Alkylmethacrylate mit 1 bis 8 C-Atomen.

Gemäß einer anderen Ausführungsform der Erfindung enthält die Kunststoffolie oder Kunststoffolienbahn mindestens eine Unterfolie oder besteht daraus, die als Kunststoffanteil oder Kunststoffmischung (x) 5 bis 80 Gew.-Teile, vorzugsweise 10 bis 60 Gew.-Teile, mindestens eines elastischen reaktive Gruppen enthaltenden Polymeren oder mindestens eines thermoplastischen reaktive Gruppen enthaltenden Elastomeren oder eines reaktive Gruppen enthaltenden Polymeren oder Polymergemisches mit einem Anteil an elastischen Polymeren von mehr als 60 Gew.-%, vorzugsweise mehr als 75 Gew.-%, (bezogen auf 100 Gew.-Teile des elastomerhaltigen Polymeren oder Polymergemisches), (y) 95 bis 20 Gew.-Teile, vorzugsweise 90 bis 40 Gew.-Teile, mindestens eines reaktive Gruppen enthaltenden Polyolefins oder polyolefinhaltigen Ionomeren, vorzugsweise mindestens eines reaktive Gruppen enthaltenden Olefinco-, -ter- und/oder pfropfpolymerisats und/oder eines Ionomeren enthaltend oder auf der Basis eines Polyolefinhomo-, -co-, -ter- und/oder -pfropfpolymerisates, enthält oder daraus besteht, wobei der E-Modul der Mischung von (x) und (y) oder der E-Modul der daraus thermogeformten Kunststoffolie oder Kunststoffolienbahn oder der Schicht (bei mehrschichtigen Kunststoffolien) zwischen 50 bis 600 N/mm², vorzugsweise 70 und 550 N/mm², liegt.

Die reaktiven Gruppen des reaktive Gruppen enthaltenden Polyolefins und/oder des zusätzlich reaktive Gruppen enthaltenden elastischen Polymers oder thermoplastischen Elastomeren sind vorzugsweise Carboxyl-, Hydroxyl-, Anhydrid-, Amin-, Amid-, Isocyanat-, Epoxy- und/oder Nitril-Gruppen. Der Gewichtsanteil an reaktiven Gruppen beträgt 0,2 bis 30 Gew.-%, vorzugsweise 0,3 bis 25 Gew.-%, bezogen auf das oder die reaktive Gruppen enthaltenden elastischen Polymeren (berechnet mit 100 Gew.-Teilen) oder reaktive Gruppen enthaltenden thermoplastischen Elastomeren oder Polymerischungen gemäß (x) und 0,2 bis 25 Gew.-%, vorzugsweise 0,5 bis 20 Gew.-%, bezogen auf das oder die reaktive Gruppen enthaltende(n) Polyolefin(e) oder polyolefinhaltige(n) Ionomere(n) gemäß (y).

Das oder die elastischen reaktive Gruppen enthaltende(n) Polymere(n) und/oder thermoplastische(n) Elastomere(n) ist bzw. sind ganz oder teilweise mit dem reaktiven Polyolefin verbunden, wobei die Bindung ganz oder teilweise durch covalente Bindung und/oder Ionenbindungen erfolgt.

Das reaktive Gruppen enthaltende elastische Polymer und/oder thermoplastische Elastomere besteht nach einer Ausführungsform aus Mischungen von verschiedenen reaktiven und nichtreaktiven Polymeren, wobei jedoch der Gesamtgehalt an reaktiven Gruppen der Mischungen 0,2 bis 30 Gew.-%, vorzugsweise 0,3 bis 25 Gew.-%, (bezogen auf 100 Gew.-% des reaktive Gruppen enthaltenden Polymergemisches) beträgt.

Nach einer bevorzugten Ausführungsform enthält die Kunststoffolie, insbesondere bei der Herstellung, das aus (x) und (z) bestehende Kunststoffgemisch je 100 Gew.-Teile (z) 0,5 bis 30 Gew.-Teile, vorzugsweise 5 bis 25 Gew.-Teile, eines anderen Thermoplasten (ausgenommen jedoch eines freien, reaktive Gruppen enthaltenden Polyolefins oder polyolefinischen Ionomers oder thermoplastischen Elastomeren oder elastischen Polymeren).

Nach einer bevorzugten Ausführungsform enthält mindestens die Unterfolie je 100 Gew.-Teile von (x) und (y) oder von (x), (y) und (z) zusätzlich 0,01 bis 6 Gew.-Teile mindestens eines Verarbeitungshilfs- oder Zusatzmittels, vorzugsweise mindestens eines Stabilisators, Antioxidants, UV-Absorbers, Gleitmittels und/oder Antistatikums in einer Schicht oder die Kunststoffolie oder Kunststoffolienbahn besteht daraus.

Die Kunststofformmasse oder kunststoffhaltige Formmasse zur Herstellung der Unterfolie oder Unterfolienbahn oder mindestens eine Schicht der Unterfolie oder Unterfolienbahn enthalten nach einer bevorzugten Ausführungsform (x) 5 bis 80 Gew.-Teile, vorzugsweise 10 bis 60 Gew.-Teile, mindestens eines elastischen reaktive Gruppen enthaltenden Polymeren und/oder mindestens eines thermoplastischen reaktive Gruppen enthaltenden Elastomeren oder eines reaktive Gruppen enthaltenden Polymeren oder Polymergemisches mit einem Anteil an elastischen Polymeren von mehr als 60 Gew.-%, vorzugsweise 75 Gew.-%, (bezogen auf 100 Gew.-Teile des elastomerhaltigen Polymeren oder Polymergemisches) (y) 95 bis 20 Gew.-Teile, vorzugsweise 90 bis 40 Gew.-Teile, mindestens eines reaktive Gruppen enthaltenden Polyolefins oder polyolefinhaltigen Ionomeren, vorzugsweise mindestens eines reaktive Gruppen enthaltenden Olefinco-, -ter- und/oder -pfropfpolymerisats und/oder eines Ionomeren enthaltend oder auf der Basis eines Polyolefinco-, -ter- und/oder -pfropfpolymerisates, und/oder (x), (y) und (z) 0,5 bis 30 Gew.-Teile, vorzugsweise 5 bis 25 Gew.-Teile, eines Thermoplasten, ausgenommen jedoch eines freie, reaktive Gruppen enthaltenden Polyolefins oder polyolefinischen Ionomers oder thermoplastischen Elastomeren oder elastischen Polymeren, als Kunststoffanteil oder bestehen daraus, wobei das elastische Polymere, Elastomere und/oder elastomerhaltige Polymere oder Polymergemisch (x) einen unterschiedlichen 2-%-E-Modul, vorzugsweise einen um mehr als 10 N/mm² unterschiedlichen, insbesondere niedrigeren 2-%-E-Modul (gemessen bei 20 °C), aufweist als das reaktive Gruppen enthaltende Polyolefin und/oder olefinische Ionomere, und bezogen auf 100 Gew.-Teile (x) und (y) oder (x), (y) und (z) die Kunststoffolie, Kunststoffbahn oder Schicht der mehrschichtigen Kunststoffolie oder Kunststoffolienbahn zusätzlich 0,01 bis 30 Gew.-Teile, vorzugsweise 0,1 bis 20 Gew.-Teile, mindestens eines Füllstoffes, ausgewählt aus der Gruppe der Metalloxide, Metallcarbonate, Metalldioxide, Metallhydrate, Metallhydroxide, Hydrotalcite und/oder Silicate, und/oder eines organischen Füllstoffes, ausgewählt aus der Gruppe der feinteiligen Cellulose, Stärke und/oder des feinteiligen Kohlenstoffes, vorzugsweise jedoch Calciumcarbonat, Zinkoxid, Magnesiumoxid, Calciumoxid und/oder Siliciumdioxyd, Talkum, Glimmer oder Wollastonit, 0,01 bis 5 Gew.-Teile, vorzugsweise 0,1 bis 3 Gew.-Teile, mindestens eines Stabilisators, Antioxidants und/oder UV-Absorbers, 0,01 bis 5 Gew.-Teile, vorzugsweise 0,1 bis 3 Gew.-Teile, mindestens eines Farbstoffes und/oder Farbpigmentes, 0 bis 3 Gew.-Teile, vorzugsweise 0,01 bis 2 Gew.-Teile, mindestens eines Gleitmittels und/oder Antistatikums, 0 bis 20 Gew.-Teile, vorzugsweise 1 bis 12 Gew.-Teile, mindestens eines Flammschutzmittels enthält oder daraus besteht.

Das reaktive Gruppen enthaltende Polyolefin (y) besteht nach einer vorzugsweisen Ausführungsform aus einer Mischung oder Legierung und/oder einem Co- oder Pfropfpolymerisat aus einem Olefin, vorzugsweise Ethylen und/oder Propylen, und einer mindestens eine ungesättigte Bindung enthaltende Carbonsäure und/oder dessen Anhydrid, vorzugsweise Acrylsäure, Methacrylsäure, Maleinsäure und/oder Maleinsäureanhydrid, und/oder einem Olefin oder Polyolefin, vorzugsweise Ethylen oder Polyethylen und einer mindestens eine Epoxygruppe enthaltende Verbindung, vorzugsweise Methacrylatglycid oder einem Copolymerisat einer oder mehrerer dieser Verbindungen oder enthält diese.

Nach einer weiteren bevorzugten Ausführungsform besteht oder bestehen das oder die elastische(n) Polymere(n), die reaktive Gruppen oder zusätzliche reaktive Gruppen enthaltende Verbindungen besitzen, aus einem reaktive Gruppen enthaltenden Ethylen-Propylen-Mischpolymerisat (EPM), einem reaktive Gruppen enthaltenden oder reaktiv modifiziertem Ethylen-Propylen-Dien-Mischpolymerisat (EPDM), reaktive Gruppen enthaltenden Diblockpolymeren aus Styrol mit Butadien, mit Isopren, mit Ethylen-Butylen oder mit Ethylen-Propylen, vorzugsweise aus reaktive Gruppen enthaltenden Styrol-3-Blockpolymeren mit Ethylen-Butylen und Ethylen-Propylen, einem elastischen Polyester und/oder Polyetherester, Polyesteramid, Polyetheramid oder Copolyester oder Polyurethan oder Polyether-Urethan-Segmentpolymeren.

Nach einer weiteren Ausführungsform wird neben den Bestandteilen (a) und (b) der Unterfolie noch ein peroxidisches Vernetzungsmittel oder ein reaktive Gruppen enthaltendes organisches oder polymeres Vernetzungsmittel in Gewichtsmengen von 0,1 bis 20 Gew.-Teilen, vorzugsweise 0,3 bis 12 Gew.-Teilen, mitverwendet.

Das reaktive Gruppen enthaltende polymere Vernetzungsmittel der Unterfolie oder Unterfolien weist nach einer bevorzugten Ausführungsform neben Acrylat- und/oder Methacrylat-Gruppen bzw. Acrylsäure- und/oder Methacrylsäuregruppen und mehr als 51 Gew.-% Ethylen- und/oder Olefin- bzw. (CH₂)- oder CH-Gruppen, Epoxidgruppen oder epoxyähnliche Gruppen, vorzugsweise Glycidylgruppen, auf.

Die reaktive Gruppen enthaltenden Polymeren und/oder Ionomeren der Unterfolie enthalten nach einer Ausführungsform als Metallion vorzugsweise Alkali- und/oder Erdalkali-Ionen und/oder Zinkionen.

Nach einer Ausführungsform enthalten die reaktive Gruppen aufweisenden Polymeren und/oder Ionomeren Alkylacrylate und/oder Alkylmethacrylate mit 1 bis 8 C-Atomen.

Der Bestandteil (c) kann u. a. ein Vinylacetathomo-, -co- oder -terpolymerisat oder ein anderes Säure- und/oder Estergruppen enthaltendes Polymerisat darstellen (EA, EAA, EMA).

Zur Folienherstellung werden in mindestens einem Extruder die Bestandteile der Oberfolie und mindestens einem weiteren Extruder die Bestandteile der Unterfolie oder Unterfolien bei Temperaturen von 150 bis 280 °C, vorzugsweise 180 bis 250 °C, extrudiert, wobei zwei oder mehrere Bestandteile der Unterfolie unter Verwendung eines Doppelschneckenextruders bei der Extrusionstemperatur teilweise in Reaktion oder Kopplungsreaktion treten und die Verbundfolie als Coextrusionsfolie hergestellt wird.

Nach einer weiteren bevorzugten Ausführungsform des erfindungsgemäßen Verfahrens wird die Shore D-Härte der Oberfolie unter Verwendung und/oder Mitverwendung mindestens eines polyolefinhaltigen oder polyolefingruppenhaltigen Kunststoffes mit einer niedrigeren Shore D-Härte (gemessen nach DIN 53505) sowie gegebenenfalls unter Verwendung mindestens eines polyolefinhaltigen oder polyolefingruppenhaltigen Kunststoffes mit einer höheren Shore D-Härte auf einen Shore D-Wert eingestellt, der um mehr als 3 Shore D-Einheiten, vorzugsweise um 5 bis 10 Shore D-Einheiten, niedriger ist als der Shore D-Wert der darunter angeordneten Unterfolie.

Die Härte der Oberfolie wird unter Auswahl der polyolefinhaltigen und/oder olefingruppenhaltigen Kunststoffe oder Bestandteile mit niedrigerer und höherer Shore D-Härte und deren Gewichtsmengen auf eine Härte von weniger als 37 D-Shore, vorzugsweise 28 bis 35 D-Shore (gemessen nach DIN 53505), und die Härte der Unterfolie(n) auf mindestens 38 D-Shore, vorzugsweise 39 bis 46 D-Shore, eingestellt.

Nach einer bevorzugten Ausführungsform werden die Oberfolie (auf ihrer der Unterfolie abgewandten Fläche) und/oder die Unterfolie (auf ihrer der Oberfolie abgewandten Fläche) mit mindestens einer polyacrylat-, polymethacrylat- und/oder polyurethanhaltigen und Verdünnungsmittel, vorzugsweise organisch-chemisches Lösemittel, enthaltenden Beschichtung unter Verwendung eines Beschichtungsmittelauftragsverfahrens, vorzugsweise unter Verwendung eines Spritz-, Sprüh-, Streich-, Rollen- oder Druckwalzenauftragsverfahrens, versehen, wobei die Beschichtung der Oberfolie 0,01 bis 18 Gew.-%, vorzugsweise 0,1 bis 12 Gew.-%, mindestens eines feinteiligen Mattierungsmittel enthält.

Bevorzugt wird für die unterhalb der Unterfolie angeordnete Schicht oder Beschichtung mindestens ein antistatisches Mittel und/oder mindestens ein haftvermittelndes chemisches Mittel, vorzugsweise feinstteiliger Kohlenstoff oder Ruß mit einer mittleren Teilchengröße unter 100 nm, vorzugsweise zwischen 10 und 80 nm, und/oder mindestens eine feinstteilige Kieselsäure oder ein feinstteiliges Siliziumdioxyd und/oder Silikat mit einem mittleren Körnungsdurchmesser unter 4 µm, vorzugsweise unter 3 µm verwendet.

Die vorliegende Erfindung betrifft weiterhin die Verwendung der Verbundfolie allein oder in Kombination mit einer Schaumschicht, Trägerschicht oder einem Träger, Stützschicht, Abstandsschicht oder einer Gitter- oder Gewebeschicht zur Herstellung von Kraftfahrzeuginnenverkleidungen, vorzugsweise für Schalttafeln oder Armaturenbretter für Kraftfahrzeuge, Seitenwandteile für Kraftfahrzeuge, Türverkleidungen für Kraftfahrzeuge, Dachinnenverkleidungen (Autohimmel), Innenrückwandteile für Kraftfahrzeuge (Hutablage) und andere Innenverkleidungsteile oder Gegenstände für Kraftfahrzeuge.

| **Beispiele Oberfolie** | **1** | **2** |
|---|---|---|
| PP-Blockpolymer¹ | 80 | - |
| PP-Blockpolymer² | - | 60 |
| PP-EPDM³ | 10 | 10 |
| PP-EPDM⁴ | - | 10 |
| Ionomer⁵ | 10 | - |
| Ionomer⁶ | - | 10 |

| | | |
|---|---|---|
| (1) MFI = 0,8 g/10 min 230 °C/21,6 N | | |
| (2) MFI = 3,0 g/10 min 230 °C/21,6 N | | |
| (3) MFI = 5,0 g/10 min 230 °C/21,6 N | | |
| (4) MFI = 30,0 g/10 min 230 °C/21,6 N | | |
| (5) Kationtyp Zinc MFI 1,0 g/min 190 °C/21,6 N | | |
| (6) Kationtyp Zinc MFI 3,0 g/min 190 °C/21,6 N | | |

| **Beispiele Unterfolie** | **1** | **2** | **3** | **4** | **5** |
|---|---|---|---|---|---|
| PP-Blockpolymer¹ | 82 | - | 80 | - | - |
| PP-Copopolymer³ | - | 20 | - | - | - |
| PP-Homopolymer⁸ | - | - | - | 30 | 20 |
| SEBS² | 18 | - | 10 | - | - |
| EPDM-1⁴ | - | 50 | - | - | - |
| LLDPE⁵ | - | 30 | 10 | - | - |
| EVA⁶ | - | - | - | 70 | - |
| DHBP⁷ | - | - | - | 0,2 | - |
| EPDM-2⁹ | - | - | - | - | 45 |
| Ionomer¹⁰ | - | - | - | - | 35 |
| Dehn-Spannung (bei 170°C) (Pa) | 69.10³ | 40.10³ | 47.10³ | 80.10³ | 130.10³ |

| | | | | | |
|---|---|---|---|---|---|
| ( 1) MFI = 0,8 g/10 min 230 °C/21,6 N | | | | | |
| ( 2) MFI = 3,0 g/10 min 200 °C/50,0 N Styrol-Ethylen-Butylen-Styrol | | | | | |
| ( 3) MFI = 6,0 g/10 min 230 °C/21,6 N | | | | | |
| ( 4) MFI = 2,0 g/10 min 230 °C/21,6 N | | | | | |
| ( 5) MFI = 2,0 g/10 min 230 °C/21,6 N | | | | | |
| ( 6) Ethylenvinylacetat mit 28 % VAC-Gehalt | | | | | |
| ( 7) Dimethylbutylperoxy-Hexan | | | | | |
| ( 8) MFI = 4,0 g/10 min 230 °C/21,6 N | | | | | |
| ( 9) Mooney-Viskosität 46 ML (2+10) 120 °C | | | | | |
| (10) MFI = 1,0 g/10 min 190 °C/21,6 N Ethylen-Acrylsäure-Copolymer | | | | | |

### Zeichnungsbeschreibung

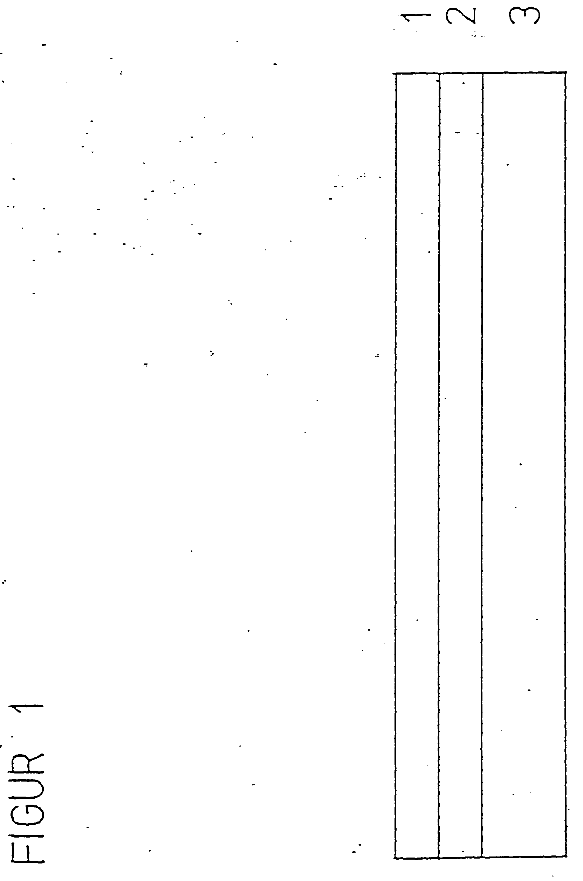

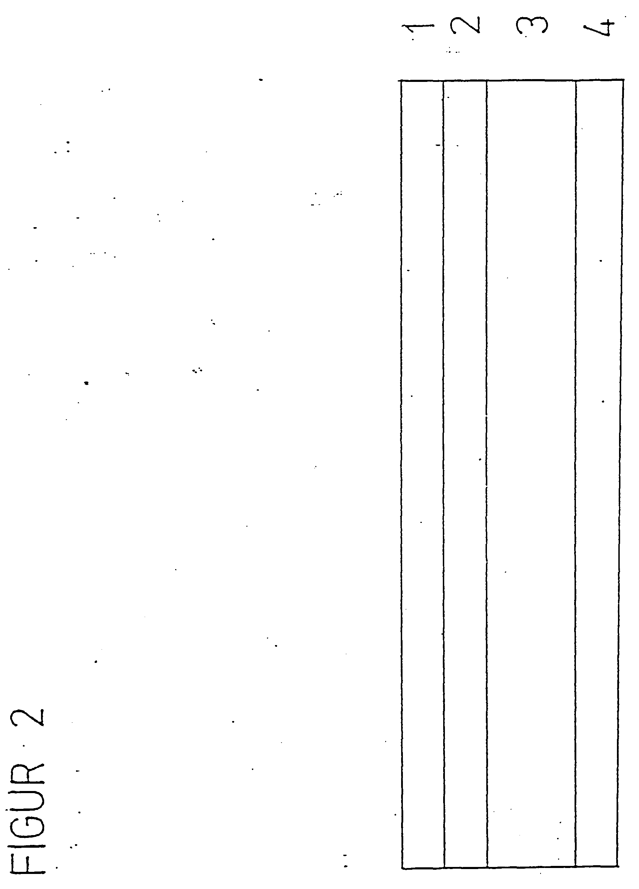

In den beigefügten Zeichnungen (Figur 1 und 2) sind schematisch einige Ausführungsbeispiele der erfindungsgemäßen Verbundfolie wiedergegeben wobei die Dickenabmessungen nicht den eigentlichen Dicken der Schichten entsprechen (so insbesondere bei der Oberflächenschutzschicht bzw. Lackschicht, die in der Praxis zwischen 8 bis 60 µm, vorzugsweise 10 bis 50 µm, liegt).

Unter (1) ist die Lack- oder Oberflächenschutzschicht wiedergegeben, die vorzugsweise in Form eines Verbindungs- oder Lösungsmittels wie Kunstharz für die Oberflächenbeschichtung aufgetragen wird.

Unter Oberfolie (2) ist bzw. sind die Unterfolie (3) angeordnet. In Figur 2 ist zusätzlich eine weitere Schicht (4) schematisch dargestellt, die eine Schaumschicht und/oder Trägerschicht ist,.

## Patentansprüche

1. Tiefziehfähige Verbundfolie, die eine polyolefinhaltige Oberfolie und mindestens eine qualitaliv und quantitativ von der Zusammensetzung der Oberfolie abweichende polyolefinhaltige Unterfolie sowie gegebenerfalls eine Oberflächenschutzschicht enthält, wobei die Oberfolie (bezogen auf 100 Gew.-Teile Kunststoff der Oberfolie)
a) 20 bis 80 Gew.-Teile
mindestens eines vernetzten PP-EPDM (Legierung oder Mischung aus Propylenhomo- und/oder -copolymerisat und vernetztem oder teilvernetztem Ethylen-Propylen-Dien-Mischpolymerisat)
b) 80 bis 20 Gew.-Teile
eines unvernetzten Propylen-Block-Copolymerisates oder heterophasigen Propylen-Block-Polymerisates, mit einem Ethylen-Propylen-Elastomeranteil im Block bzw. in der Kette von 35 bis 75 Gew.-% (bezogen auf 100 Gew.-Teile des unvernetzten heterophasigen Propylen-Block-Copolymerisates oder Propylen-Block-Polymerisates) enthält, wobei (b) zu 15 bis 1 Gew.-%, vorzugsweise 10 bis 2 Gew.-%, durch die gleichen Gewichtsmengen eines reaktive Gruppen enthaltenden Polymeren und/oder Ionomeren (c) ersetzt ist, wobei
c) mindestens einen reaktive Gruppen enthaltenden Polymeren und/oder Ionomeren auf der Basis von Ethylen und Methacrylsäure und/oder Acrylsäure ist, wobei die Säure-Gruppen teilweise Metallionen enthalten oder durch Metallionen neutralisiert sind, und die Unterfolie oder Unterfolien mindestens zwei verschiedene Polyolefine oder polyolefinhaltige Polymerisate, -co-, -ter- oder -blockpolymerisate enthält bzw. enthalten, dadurch gekennzeichnet, daß die Unterfolie als Kunststoff aus 65 Gew.-% bis 90 Gew.-% (bezogen auf 100 Gew.-% Kunststoffanteil der Unterfolie) Propylenhomo-, -co-, -ter- und/oder -blockpolymerisat und 35 bis 10 Gew.-% Ethylenvinylacetat-Copolymerisat mit einem Vinylacetatgehalt von 10 bis 40 Gew.-% besteht oder diese Kunststoffe enthält, wobei ein Kunststoffbestandteil oder das Kunststoffgemisch oder die Kunststofflegierung mit 0,1 bis 5,0 Gew.-% mindestens eines Peroxydes oder einer peroxydgruppenhaltigen Verbindung behandelt ist, oder daß die Unterfolie mit mindestens einem teilvernetzten EPDM, einem Propylenhomo, -copolymerisat oder -pfropfpolymerisat mit oder ohne reaktive Gruppen zusätzlich ein Styrol oder Polystyrol enthaltendes Block-, Diblock- oder Triblock- und/oder Pfropfpolymerisat enthält, das teilweise durch ein Modifizierungsmittel auf der Basis eines Propylenmaleinsäureanhydrid-Misch- oder Pfropfpolymerisates, eines Propylenacrylsäure-Misch- oder Pfropfpolymerisates, eines Ethylen-Vinylacetat-Copolymerisates, eines Ethylenacrylsäure- bzw. Methacrylsäure-Copolymerisates, eines Ethylenacrylsäureester-Copolymerisates, eines Glycidyl-Methacrylat-Co- und/oder -terpolymerisates, vorzugsweise eines olefinischen oder olefingruppenhaltigen Glycidyl-Methacrylat-Co- und/oder -terpolymerisates, eines Ethylen-Glycidyl-Methacrylat-Terpolymerisates, eines olefinischen Ionomeren, eines Polyurethans, eines Polycaprolactons, eines Polyesterethers und/oder eines Polyetheramids ersetzt ist.

2. Tiefziehfähige Verbundfolie nach Anspruch 1, dadurch gekennzeichnet, daß die Bestandteile der Unterfolie so ausgewählt werden, daß die daraus hergestellte Unterfolie (bezogen auf den Anfangs- oder Ausgangsquerschnitt der Unterfolie) eine maximale Dehn-Spannung im Bereich von 20x10³ bis 130x10³ Pa aufweist (wobei diese Werte bei einer konstanten Verformungsgeschwindigkeit bei 170 °C ermittelt werden) und/oder daß die Dehn-Spannungskurve bei einer Dehnung über 150 %, vorzugsweise über 300% Dehnung, nach Erreichung des Maximums annähernd parallel zur Dehnungsachse verläuft.

3. Tiefziehfähige Verbundfolie nach Ansprüchen 1 und 2, dadurch gekennzeichnet, daß die Unterfolie als Kunststoff aus 70 bis 85 Gew.-%, vorzugsweise 75 bis 83 Gew.-%, (bezogen auf 100 Gew.-% Kunststoffanteil der Unterfolie) aus Propylenhomo-, -co-, -ter- und/oder -blockpolymerisat und 30 bis 15 Gew.-%, vorzugsweise 25 bis 17 Gew.-%, Ethylenvinylacetat-Copolymerisat besteht, die mindestens ein Peroxyd oder eine peroxydgruppenhaltige Verbindung enthalten oder mit diesen behandelt sind.

4. Tiefziehfähige Verbundfolie nach einem oder mehreren der Ansprüche 1 bis 3, dadurch gekennzeichnet, daß der Propylen- bzw. Polypropylen-Gehalt (Gehalt an Propylenhomo-, -co-, -ter- oder blockpolymerisat) des vernetzten PP-EPDM (Bestandteil (a)) der Oberfolie bezogen auf 100 Gew.-Teile des in der Oberfolie enthaltenen PP-EPDM zwischen 60 bis 90 Gew.-%, vorzugsweise 65 bis 85 Gew.-%, liegt und daß das EPDM mit einem Peroxyd oder peroxydgruppenhaltigen Verbindung vernetzt wurde und einen Gew.-Anteil (bezogen auf 100 Gew.-Teile des in der Oberfolie enthaltenen PP-EPDM) von 40 bis 10 Gew.-%, vorzugsweise 35 bis 15 Gew.-%, aufweist.

5. Verwendung der Verbundfolie nach einem oder mehreren der Ansprüche 1 bis 4 allein oder in Kombination mit einer Schaumschicht, Trägerschicht oder einem Träger, Stützschicht, Abstandsschicht oder einer Gitter- oder Gewebeschicht zur Herstellung von Kraftfahrzeuginnenverkleidungen, vorzugsweise für Schalttafeln oder Armaturenbretter für Kraftfahrzeuge, Seitenwandteile für Kraftfahrzeuge, Türverkleidungen für Kraftfahrzeuge, Dachinnenverkleidungen (Autohimmel), Innenrückwandteile für Kraftfahrzeuge (Hutablage) und andere Innenverkleidungsteile oder Gegenstände für Kraftfahrzeuge.

## Claims

1. A thermoformable composite sheet which contains a polyolefin-containing upper sheet and at least one polyolefin-containing lower sheet which differs in quality and quantity from the composition of the upper sheet, and also optionally a protective surface layer, the upper sheet (relative to 100 parts by weight plastics material of the upper sheet) containing
a) 20 to 80 parts by weight
of at least one cross-linked PP-EPDM (alloy or mixture of propylene homopolymer and/or copolymer and cross-linked or partially cross-linked ethylene-propylenediene mixed polymer),
b) 80 to 20 parts by weight
of a non-cross-linked propylene block copolymer or heterophase propylene block polymer, having a ethylene-propylene-elastomer content in the block or in the chain of 35 to 75% by weight (relative to 100 parts by weight of the non-cross-linked heterophase propylene block copolymer or propylene block polymer), with 15 to 1% by weight, preferably 10 to 2% by weight, of (b) being replaced by the same quantities by weight of a polymer and/or ionomer containing reactive groups (c), wherein
c) is at least one polymer and/or ionomer, containing reactive groups, based on ethylene and methacrylic acid and/or acrylic acid, the acid groups partially containing metal ions or being neutralised by metal ions, and the lower sheet or sheets contain(s) at least two different polyolefins or polyolefin-containing polymers, copolymers, terpolymers or block polymers, characterised in that the lower sheet as plastics material consists of 65% by weight to 90% by weight (relative to 100% by weight plastics content of the lower sheet) propylene homopolymer, copolymer, terpolymer and/or block polymer and 35 to 10% by weight ethylene-vinyl acetate copolymer having a vinyl acetate content of 10 to 40% by weight or contains these plastics materials, one plastics constituent or the plastics mixture or the plastics alloy being treated with 0.1 to 5.0% by weight of at least one peroxide or a compound containing peroxide groups, or that the lower sheet with at least one partially cross-linked EPDM, a propylene homopolymer, copolymer or graft polymer with or without reactive groups additionally contains a block, diblock or triblock polymer and/or graft polymer containing styrene or polystyrene, which is partially replaced by a modifying agent based on a propylene-maleic acid anhydride mixed or graft polymer, a propylene-acrylic acid mixed or graft polymer, an ethylene-vinyl acetate copolymer, an ethylene-acrylic acid or methacrylic acid copolymer, an ethylene-acrylic acid ester copolymer, a glycidyl-methacrylate copolymer and/or terpolymer, preferably an olefinic or olefin group-containing glycidyl-methacrylate copolymer and/or terpolymer, an ethylene-glycidyl-methacrylate terpolymer, an olefinic ionomer, a polyurethane, a polycaprolactone, a polyester ether and/or a polyether amide.

2. A thermoformable composite sheet according to Claim 1, characterised in that the constituents of the lower sheet are selected such that the lower sheet produced therefrom (relative to the initial or starting cross-section of the lower sheet) has a maximum offset yield strength in the range from 20 x 10³ to 130 x 10³ Pa (these values being determined at a constant deformation rate at 170°C) and/or that the stress-strain curve at an elongation of above 150%, preferably above 300% elongation, after reaching the maximum runs approximately parallel to the axis of elongation

3. A thermoformable composite sheet according to Claims 1 and 2, characterised in that the lower sheet as plastics material consists of 70 to 85% by weight, preferably 75 to 83% by weight (relative to 100% by weight plastics content of the lower sheet) propylene homopolymer, copolymer, terpolymer and/or block polymer and 30 to 15% by weight, preferably 25 to 17% by weight, ethylene-vinyl acetate copolymer which contain or are treated with at least one peroxide or a compound containing peroxide groups.

4. A thermoformable composite sheet according to one or more of Claims 1 to 3, characterised in that the propylene or polypropylene content (content of propylene homopolymer, copolymer, terpolymer or block polymer) of the cross-linked PP-EPDM (constituent (a)) of the upper sheet relative to 100 parts by weight of the PP-EPDM contained in the upper sheet is between 60 and 90% by weight, preferably 65 to 85% by weight, and that the EPDM has been cross-linked with a peroxide or a compound containing peroxide groups and has a percentage by weight (relative to 100 parts by weight of the PP-EPDM contained in the upper sheet) of 40 to 10% by weight, preferably 35 to 15% by weight.

5. The use of the composite sheet according to one or more of Claims 1 to 4 alone or in combination with a foam layer, backing layer or a backing, supporting layer, spacer layer or a lattice or fabric layer for producing interior trims for motor vehicles, preferably for control panels or dashboards for motor vehicles, side wall parts for motor vehicles, door trims for motor vehicles, internal roof linings (car roof liners), internal rear wall parts for motor vehicles (rear parcel shelves) and other internal trim parts or articles for motor vehicles.

## Revendications

1. Film composite emboutissable qui contient un film supérieur contenant des polyoléfines et au moins un film inférieur contenant des polyoléfines, différant qualitativement et quantitativement de la composition du film supérieur, de même qu'éventuellement une couche de protection superficielle, le film supérieur contenant (par rapport à 100 parts en poids de matière synthétique du film supérieur)
a) 20 à 80 parts en poids
d'au moins un PP-EPDM réticulé (alliage ou mélange d'un homopolymère et/ou copolymère de propylène et d'un copolymère d'éthylène-propylène-diène réticulé ou partiellement réticulé)
b) 80 à 20 parts en poids
d'un copolymère séquencé non-réticulé de propylène ou d'un polymère séquencé hétérophasique de propylène, avec une teneur en éthylène-propylène élastomère dans la séquence, respectivement dans la chaîne, de 35 à 75 % en poids (par rapport à 100 parts en poids du copolymère séquencé de propylène ou du polymère séquencé de propylène, non-réticulé et hétérophasique), (b) étant remplacé à 15 à 1 % en poids, de préférence à 10 à 2 % en poids par des quantités pondérales identiques d'un polymère et/ou ionomère (c) contenant des groupes réactionnels, où
c) est au moins un polymère et/ou ionomère contenant des groupes réactionnels, à base d'éthylène et d'acide méthacrylique et/ou d'acide acrylique, les groupes acides contenant partiellement des ions métalliques ou étant neutralisés par des ions métalliques, et le film inférieur ou les films inférieurs contient respectivement contiennent au moins deux polyoléfines ou polymères, copolymères, terpolymères ou polymères séquencés contenant des polyoléfines différent(e)s, caractérisé en ce que le film inférieur est constitué, à titre de matière synthétique, de 65 % en poids à 90 % en poids (par rapport à 100 % en poids de la teneur en matière synthétique du film inférieur) d'homopolymère, copolymère, terpolymère et/ou polymère séquencé de propylène et de 35 à 10 % en poids de copolymère d'éthylène-acétate de vinyle avec une teneur en acétate de vinyle de 10 à 40 % en poids, ou en ce qu'il contient ces matières synthétiques, un constituant de la matière synthétique ou le mélange de matières synthétiques ou l'alliage de matières synthétiques étant traité avec 0,1 à 5,0 % en poids d'au moins un peroxyde ou d'un composé contenant des groupes peroxydes, ou en ce que le film inférieur contient, ensemble avec au moins un EPDM partiellement réticulé, un homopolymère, copolymère ou polymère greffé de propylène avec ou sans groupes réactionnels, en outre un polymère séquencé, polymère diséquencé, polymère triséquencé et/ou polymère greffé contenant du styrène ou du polystyrène, qui est remplacé partiellement par un agent de modification à base d'un copolymère ou polymère greffé de propylène-anhydride de l'acide maléique, d'un copolymère ou polymère greffé de propylène-acide acrylique, d'un copolymère d'éthylène-acétate de vinyle, d'un copolymère d'éthylène-acide acrylique, respectivement acide méthacrylique, d'un copolymère d'éthylène-ester de l'acide acrylique, d'un copolymère et/ou terpolymère de méthacrylate de glycidyle, de préférence d'un copolymère et/ou terpolymère de méthacrylate de glycidyle oléfinique ou contenant des groupes oléfiniques, d'un terpolymère d'éthylène-méthacrylate de glycidyle, d'un ionomère oléfinique, d'un polyuréthane, d'une polycaprolactone, d'un polyesteréther et/ou d'un polyétheramide.

2. Film composite emboutissable selon la revendication 1, caractérisé en ce que les constituants du film inférieur sont choisis de telle manière que le film inférieur résultant présente (par rapport à la section initiale ou finale du film inférieur) une tension à l'allongement maximale dans la gamme de 20.10³ à 130.10³ Pa (ces valeurs étant déterminées avec une vitesse de déformation constante à 170 °C) et/ou de telle manière que la courbe tension-allongement présente une allure approximativement parallèle à l'axe de tension, après avoir atteint le maximum, lors d'une tension supérieure à 150 %, de préférence supérieure à 300 %.

3. Film composite emboutissable selon les revendications 1 et 2, caractérisé en ce que le film inférieur est constitué, à titre de matière synthétique, de 70 à 85 % en poids, de préférence de 75 à 83 % en poids (par rapport à 100 % en poids de la teneur en matière synthétique du film inférieur) d'homopolymère, copolymère, terpolymère et/ou polymère séquencé de propylène et de 30 à 15% en poids, de préférence de 25 à 17 % en poids, de copolymère d'éthylène-acétate de vinyle, qui contien(nen)t au moins un peroxyde ou un composé contenant des groupes peroxydes ou qui est (sont) traité(s) par ceux-ci.

4. Film composite emboutissable selon une ou plusieurs des revendications 1 à 3, caractérisé en ce que la teneur en propylène, respectivement en polypropylène (teneur en homopolymère, copolymère, terpolymère ou polymère séquencé de propylène) du PP-EPDM réticulé (constituant (a)) du film supérieur, par rapport à 100 parts en poids du PP-EPDM contenu dans le film supérieur, se situe entre 60 et 90 % en poids, de préférence entre 65 et 85 % en poids, et en ce que le EPDM a été réticulé avec un peroxyde ou un composé contenant des groupes peroxydes et présente une teneur pondérale (par rapport à 100 parts en poids du PP-EPDM contenu dans le film supérieur) de 40 à 10 % en poids, de préférence de 35 à 15 % en poids.

5. Utilisation du film composite selon une ou plusieurs des revendications 1 à 4, seul ou en combinaison avec une couche de mousse, une couche de support ou un support, une couche de soutien, une couche d'espacement ou une couche de grillage ou de tissu, pour la production de garnitures intérieures de véhicules automobiles, de préférence pour des tableaux de commande ou des tableaux de bord pour véhicules automobiles, de parois latérales pour véhicules automobiles, de garnitures de portières pour véhicules automobiles, d'habillages de plafond pour véhicules automobiles, de parois arrières intérieures pour véhicules automobiles (plage arrière) et d'autres pièces d'habillage d'intérieur ou d'objets pour véhicules automobiles.
